# EUROPEAN PATENT APPLICATION

(11) **EP 1 661 475 A1**
(43) Date of publication of application: **31.05.2006**
(21) Application number: 05012451.0
(22) Date of filing: 09.06.2005
(51) Int. Cl.: A43C 3/00, B29D 31/515, A43C 5/00, A43C 7/00

(54) **Method for manufacturing footwear accessories and accessories thus obtained**

(30) Priority: 26.11.2004 IT FI20040244
(71) Applicant: 10 Ottobre S.r.l., 50052 Certaldo (FI) (IT)
(72) Inventor: Spinelli, Andrea, 52100 Arezzo (IT)
(74) Representative: Strasser, Wolfgang

(57) **Abstract**

Method for the manufacture of footwear accessories such as shoelace hooks and similar, said accessories being composed of several distinct parts, that is at least one first part (1) and at least one second part (2;37), said at least one second part (2; 37) being pre-formed, characterised in that it comprises the following operative steps:
- positioning of said pre-formed part (2; 37) in a corresponding seat (32; 39) featured by a first element (30) of a mould (3);
- positioning of a second element (31) of said mould (3) on said first mould element (30), that is closing of the mould (3);
- pressure injection of a predetermined quantity of molten metal into an imprint in said second mould element (31) the shape of which corresponds to the shape of said first part (1) of the accessory to be realised;
- after a predetermined time has elapsed, opening of the mould (3), with separation of said first and second mould elements;
- extraction of the die-cast piece thus obtained.

## Description

The present invention concerns a method for manufacturing footwear accessories such as shoelace hooks and similar in metal alloy and the accessories thus obtained.

It is known that footwear accessories such as shoelace hooks present a body with one or more passages for a lace to run through and a rivet to allow the hook to be fixed to the upper of the shoe.

To realise the association of the rivet with the body of the hook, at present the parts are assembled by hand or with a moulding technique in a centrifuge. But the manual assembly of the parts involves excessive production times and costs in relation to the current industrial needs, and moulding in a centrifuge, on account of its nature, does not allow hooks and similar accessories to be realised with structural characteristics sufficient to allow their use on so-called "technical" shoes, such as work boots, trekking boots and so on.

The main aim of the present invention is to overcome the above-mentioned inconveniences.

This result is achieved, according to the present invention, by adopting a method and accessory having the characteristics described in the independent claims. Other characteristics of the invention are the object of the dependent claims.

The footwear accessories realised according to the present method feature characteristics of sturdiness and structural resistance such as to allow their safe and reliable use even on technical footwear.

Moreover, an operative method according to the present invention is simple to implement, may be automated, and does not require the intervention of particularly skilled personnel. Further economic and operative advantages derive from the use of the equipment which is simple, inexpensive and reliable even after repeated and prolonged use.

These and other advantages and characteristics of the present invention will be better understood by any technician in the field from the following description, with the aid of the enclosed drawings, given here simply as a practical example of the invention, but without limiting it in any sense, in which:
- Fig.1 represents a schematic perspective view of a bottom base of the mould usable for implementing the method according to the invention;
- Figs.2A-2C schematically represent the positioning of two rivets in the respective seats offered by the base shown in Fig.1;
- Fig.3 schematically represents the closure of the mould, with the positioning of the top base on the bottom one;
- Fig.4 schematically represents the mould opening step and the extraction of the moulded pieces after the injection and cooling of the alloy;
- Figs.5A-5C schematically represent the positioning of two rivets in a bottom base of a mould usable for the production of a second type of hook for footwear according to the invention;
- Figs.6A-6C schematically represent the positioning of two steel wires in the mould base in Figs.5A-5C;
- Fig.7 schematically represents the closure of the mould in Figs.5A-6C, with the positioning of the respective top base on the bottom one;
- Fig.8 schematically represents the opening step of the mould in Fig.7 and the extraction of the moulded pieces after the injection and cooling of the alloy;
- Figs.9A-9C schematically represent the positioning of four rivets in a bottom base of a mould usable for the production of a third type of hook for footwear according to the invention;
- Figs.10A-10C schematically represent the positioning of two steel wires in the mould base in Figs.9A-9C;
- Fig.11 schematically represents the closure of the mould in Figs.10A-10C, with the positioning of the respective top base on the bottom one;
- Fig.12 schematically represents the opening step of the mould in Fig.11 and the extraction of the moulded pieces after the injection and cooling of the alloy.

A method according to the present invention allows the realisation of unitary footwear accessories composed of a plurality of distinct elements.

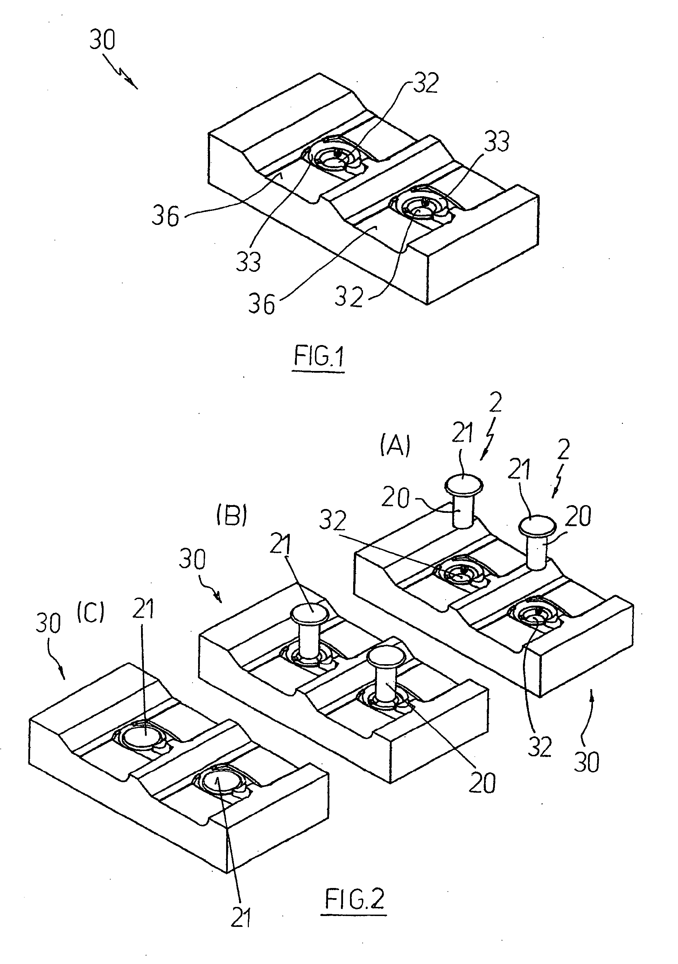

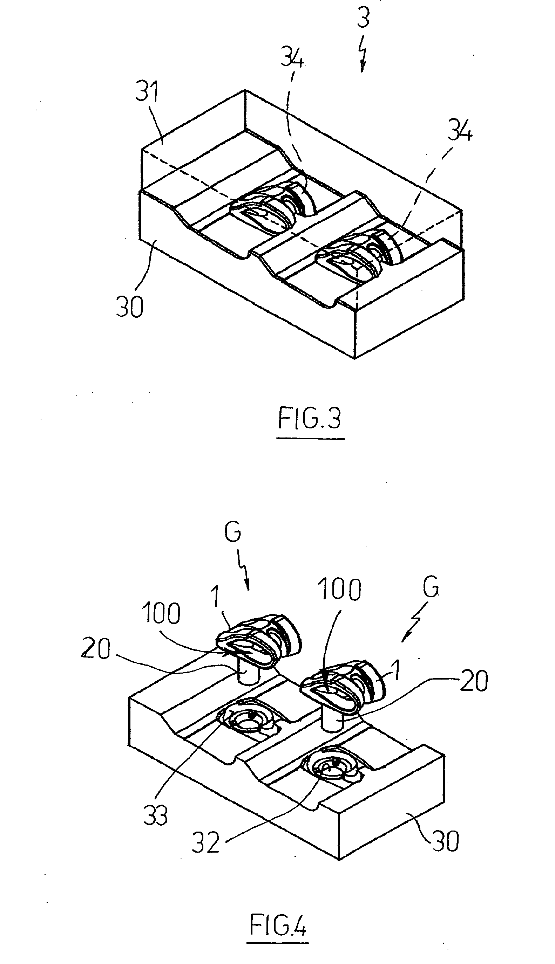

Reduced to its essential structure and with reference to the example shown in figures 1-5 of the enclosed drawings, the present method is used for the production of shoelace hooks (G) presenting a body (1) with passages (100) for a lace (not shown in the drawings) and a rivet (2) for its application on the upper of a shoe (not shown in the drawings) . The rivet (2) comprises a cylindrical leg (20) and a circular head (21), the diameter of which is greater than that of the leg (20). The method involves the use of an openable mould (3), that is of the type comprising a bottom half-mould (30) and a separate top half-mould (31) which can be moved close to and away from each other. The top half-mould (1) is interlocked with a pressure injection device suited to inject predetermined quantities of metal alloy in the molten state. Said injection device is already known and will not therefore be described in greater detail.

The bottom half-mould (30) features a plurality of vertical holes (32) the dimensions of which, that is the diameter and height, correspond to the dimensions of the leg (20) of the rivets (2).

Moreover, close to the upper base of each of said holes (32), the bottom half-mould (30) features a ring-shaped hollow (33) coaxial with the respective hole (32). The diameter and the depth of each hollow (33) corresponds to the diameter and the height (or thickness) of the head (21) of the rivets (2).

The top half-mould (31) is provided with a plurality of imprints (34) each of which is of a shape corresponding to the body (1) of the hook (G) to be realised. The number of said imprints (34) is equal to the number of holes (32) and of the respective hollows (33).

The method is implemented as follows.

With the mould (3) open, a corresponding rivet (2) is positioned in each hole (32) in the bottom half-mould (30), with the leg (20) completely inside the hole (32) and with the head (21) in the hollow (33) surrounding the hole. In this way, the head (21) of each rivet (2) is flush with the surface (36) of the half-mould (30) in which the hollow (34) is formed. The mould (3) is then closed, by positioning the top half-mould (31) on the bottom half-mould (30).

Molten metal is then injected under pressure, which determines the formation of the bodies (1) of the hooks (G) in the imprints (34) in the top half-mould (31). After a predetermined time has elapsed, that is, a sufficient time for the metal to solidify, the mould is opened, by separating the top half-mould (31) from the bottom one (30). At this point, the hooks (G) are extracted from the bottom half-mould (30). During the solidifying step of the metal of the bodies (1), the heads (21) of the rivets are encased in the same metal, so that the hooks (G) extracted from the half-mould (30), though being composed of two distinct elements, that is the body (1) and the rivet (2), thanks to the die-casting thus accomplished are featured as a unitary ensemble, with optimum structural characteristics even for application on technical footwear.

When the mould is closed, the imprints (34) of the top half-mould (31) are of course in positions corresponding to the holes (32) in the bottom half-mould (30).

The introduction of the rivets (2) in the holes (32) in the bottom half-mould (30) may be carried out either manually or by means of an automatic or robotised loader of the type normally available on the market.

Said alloy may be, for example, a known alloy such as ZAMA 15.

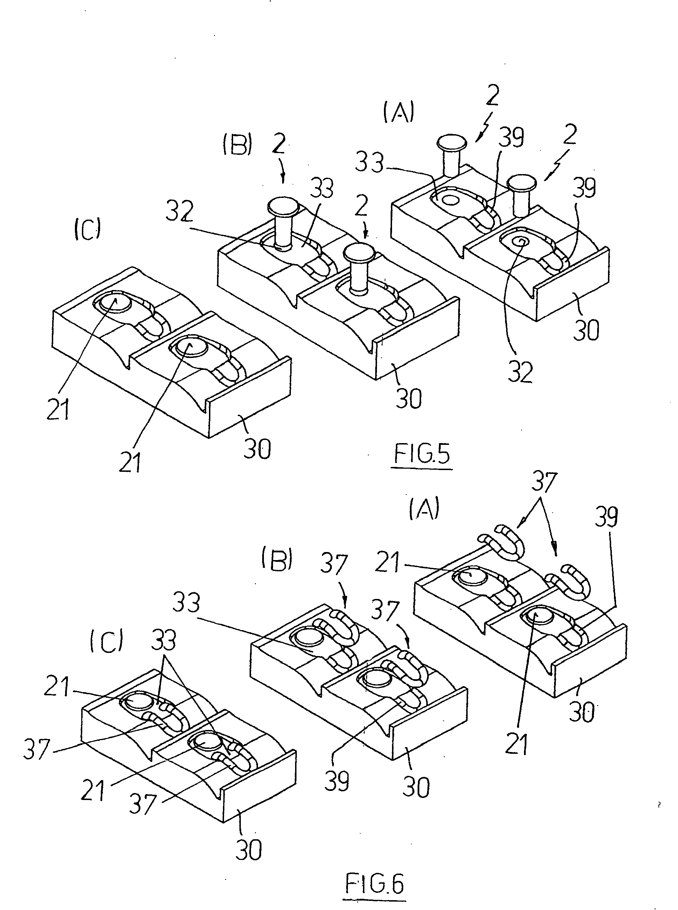

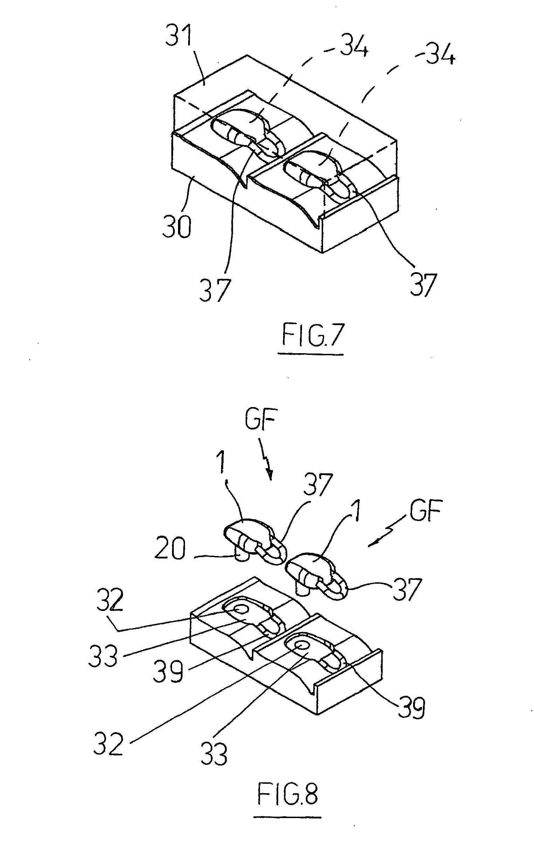

With reference to Figs.5A-8 in the enclosed drawings, the same method may also be implemented for the production of shoelace hooks (GF) in which the passage for the lace is delimited by an arch (37) of metal wire, for example steel wire.

For this purpose, besides the two holes (32) and the two hollows (33) respectively provided for the legs (20) and the heads (21) of the rivets (2), the bottom half-mould (30) also features two corresponding arched hollows (39) in each of which a respective wire (37) is housed. The hollows (33) and (39) corresponding to each hole (32) are connected to each other, in such a way that the free end of each arch of wire (37) may be positioned in the hollow (33) that holds the head (21) of the respective rivet (2).

Similarly to the case described above, first the pre-formed parts of the hook, that is the rivet (2) and the arch (37), are positioned in the corresponding seats (32, 33; 39) in the bottom half-mould (30), after which the top half-mould is positioned on the bottom one and the alloy is injected under pressure. Once a sufficient time has elapsed for the parts to solidify, the mould is opened and the moulded parts (GF) are extracted from the bottom half-mould (30).

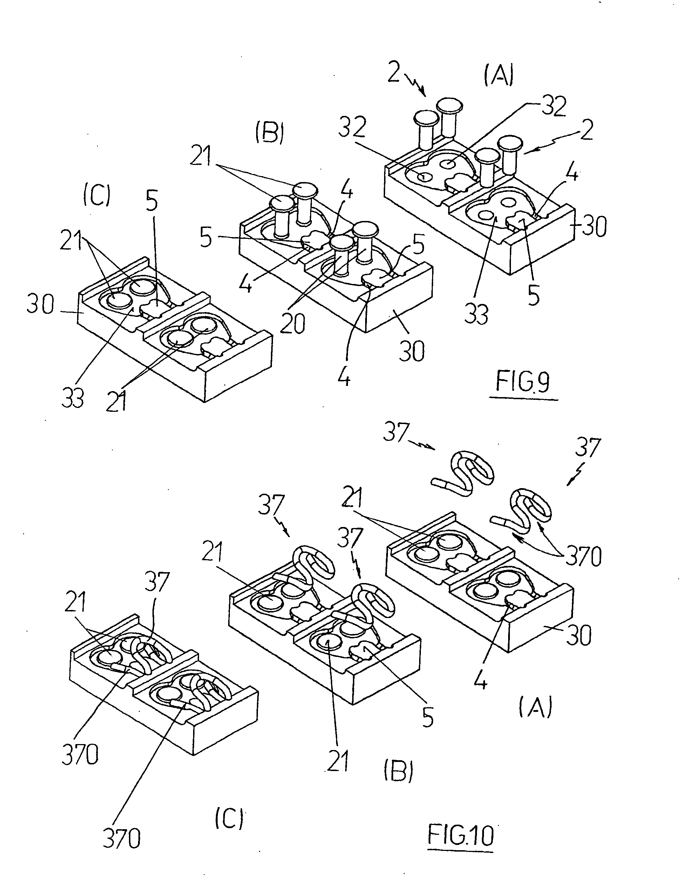

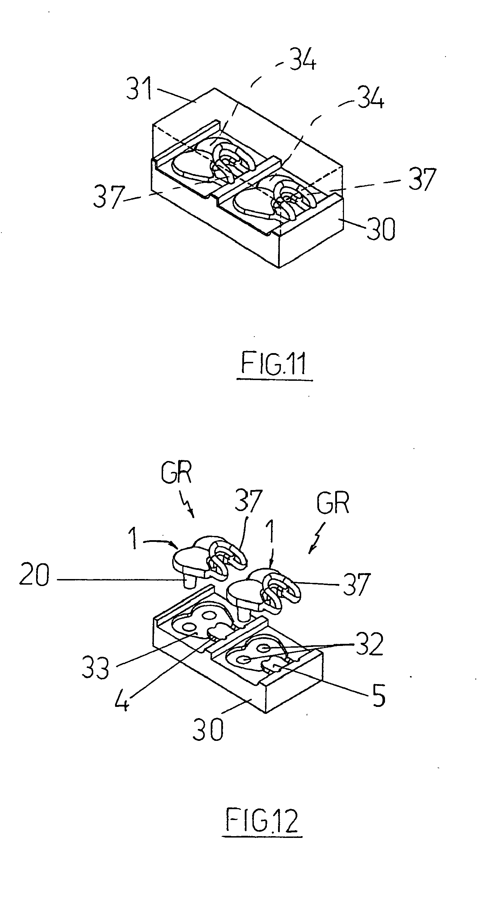

With reference to Figs.9A-12 in the enclosed drawings, the same method may also be implemented for the production of shoelace hooks (GR) in which the passage for the lace is delimited by a steel arch (for simplicity's sake also identified by the numerical reference 37 even though it is of a different shape) and the body (1) of the hook is of the double rivet type, that is of the type provided with two parallel rivets (2).

For this purpose, the bottom half-mould (30) features, for each hook (GR) to be realised, two holes with parallel axes (32), in each of which is inserted a corresponding rivet (2), which are inside an imprint (33) in which the heads (21) of the rivets (2) fit when the respective legs (20) are inserted in the respective holes (32). From each of said hollows (33) run two parallel channel imprints (4) separated by a septum (5) in each of which a corresponding arm (370) fits. Similarly to the case described above, the free ends of the two arms (370) of each arch (37) are positioned inside the respective hollow (33).

First the pre-formed parts of the hook, that is the rivets (2) and the arch (37), are positioned in the corresponding seats (32, 33; 4) in the bottom half-mould (30), after which the top half-mould is positioned on the bottom one and the alloy is injected under pressure. Once a sufficient time has elapsed for the parts to solidify, the mould is opened and the moulded parts (GR) are extracted from the bottom half-mould (30).

In practice the details of execution may vary, as may the shape, dimensions, the arrangement of the elements, or the nature of the materials used, without departing from the idea of the solution adopted and thus remaining within the limits of the protection afforded by the present patent.

## Claims

1. Method for the manufacture of footwear accessories such as shoelace hooks and similar, said accessories being composed of several distinct parts, that is at least one first part (1) and at least one second part (2;37), said at least one second part (2; 37) being pre-formed, **characterised in that** it comprises the following operative steps:
- positioning of said pre-formed part (2; 37) in a corresponding seat (32; 39) featured by a first element (30) of a mould (3);
- positioning of a second element (31) of said mould (3) on said first mould element (30), that is closing of the mould (3);
- pressure injection of a predetermined quantity of molten metal into an imprint in said second mould element (31) the shape of which corresponds to the shape of said first part (1) of the accessory to be realised;
- after a predetermined time has elapsed, opening of the mould (3), with separation of said first and second mould elements;
- extraction of the die-cast piece thus obtained.

2. Method according to claim 1 **characterised in that** said accessory is a shoelace hook for footwear(G), wherein the pre-formed element (2) is a rivet and the part (1) that is formed in the imprint featured by the second mould element (31) is a body (1) with one or more passages for a lace.

3. Method according to claim 1 **characterised in that** it involves the simultaneous realisation of several accessories at a time.

4. Method according to claim 1 **characterised in that** the pre-formed parts of the accessory are two in number, composed of a rivet (2) and an arch (37) in metal wire.

5. Method according to claim 1 **characterised in that** the pre-formed parts of the accessory are three in number, composed of two rivets (2) and of an arch (37) in metal wire.

6. Accessory for footwear **characterised in that** it is obtained according to the method in one or more of the previous claims.
